# EUROPEAN PATENT APPLICATION

(11) **EP 4 660 232 A1**
(43) Date of publication of application: **10.12.2025**
(21) Application number: 25167153.3
(22) Date of filing: 28.03.2025
(51) Int. Cl.: C08K 5/00, B29D 11/00, C08K 3/013, C08K 3/36, G02B 1/04, C08K 3/22

(54) **OPTICAL LENS AND MANUFACTURING PROCESS THEREOF**

(30) Priority: 06.06.2024 PT 2024119508
(71) Applicant: Ptscience, Unipessoal, Lda, 2460-071 Alcobaça (PT); Universidade de Coimbra, 3004-531 Coimbra (PT); Moldetipo II - Engineering Moulds And Prototypes Portugal, Lda, 430-403 Marinha Grande (PT)
(72) Inventor: FERREIRA DA SILVA, RUI MANUEL, 2430-902 Marinha Grande (PT); SOARES MARQUES, Tiago, 2400-265 Leiria (PT); BORREGO DA ENCARNAÇÃO, TELMA MARIA, 2460-521 Alcobaça (PT); BERNARDO PERICÃO RAMOS, PEDRO RENATO, 2460-521 Alcobaça (PT); FRAGA NASCIMENTO SOBRAL, ABÍLIO JOSÉ, 3030-367 Coimbra (PT)
(74) Representative: Moniz Pereira, Manuel

(57) **Abstract**

The present invention relates to optical lenses, particularly ophthalmic lenses, comprising bio-based and biodegradable materials and their manufacturing process. The lenses are composed of a thermoplastic aliphatic polyester, preferably polylactic acid (PLA), or polyhydroxyalkanoates (PHA), combined with metal oxide nanoparticles (ZrO₂, ZnO, SiO₂, MgO, TiO₂) and naphthopyrans. This composition significantly improves optical and mechanical properties while reducing environmental impact compared to conventional petroleum-based lenses. The manufacturing process employs rapid heat cycle moulding (RHCM) technology with Variotherm systems, ensuring precise temperature control and superior optical quality. The naphthopyrans function both as UV blockers (95-99% protection) and as mechanophoric materials that visibly change colour under mechanical stress, providing a visual indication of lens integrity. The invention offers exceptional optical performance with high Abbe numbers while addressing environmental concerns through biodegradability and reduced microplastic pollution.

## Description

### Technical field

The present invention relates to optical lenses, more specifically ophthalmic lenses, which comprise organic-based materials and advanced injection techniques. The optical lenses of the present invention are manufactured from a thermoplastic aliphatic polyester, namely, but not exclusively, from polylactic acid (PLA), polyhydroxyalkanoates (PHA) and metal oxides, significantly improving the optical and mechanical properties. In addition, the optical lenses comprise naphthopyrans as photochemical coatings and mechanohoric materials, increasing the functionality and durability of the lenses.

### Background of the invention

The manufacturing process of the ophthalmic lenses is a major contributor to water contamination and pollution of natural ecosystems by microplastics. The exponential increase, the high persistence and dispersion in the environment, and the occurrence throughout the food chain make it urgent to find solutions to minimise the environmental impact, through more suitable cleaning and wastewater treatment systems and to find alternatives to the materials used. The aim of the present invention is to manufacture ophthalmic lenses made from a polymeric component selected from among a thermoplastic aliphatic polyester or polyhydroxyalkanoates (PHA), wherein the thermoplastic aliphatic polyester is polylactic acid (PLA), thus contributing to the solution of the exponential increase of microplastics in the environment and reducing the enormous environmental impact caused by the production of these optical devices, made from conventional polymeric materials. It is estimated that more than 8 million tonnes of plastics are dumped into the sea every year, the equivalent of dumping a truckload of rubbish into the sea every minute. Such an extent of pollution has a tremendous impact on ecosystems and, consequently, on human health. The ingestion of microplastics by invertebrate organisms has been extensively demonstrated, which has implications for the food chain and poses a risk to human health. Human exposure to microplastics occurs through the consumption of fish, shellfish, salt, water and meat. Along with global warming, water pollution represents a dramatic global threat to animal and human life. Wastewater effluents contain pollutants that can persist in the environment, bioaccumulate through the food chain and contaminate drinking water through the urban water cycle. The US Environmental Protection Agency estimates that around 20 per cent of exposure to contaminants (plastic additives, pharmaceutical compounds, etc.) from the diet is through drinking water. Numerous environmental pollutants (parabens, phthalates, flame retardants, bisphenol a, among others) have been identified as endocrine disruptors which, even at low levels of exposure, can cause adverse hormonal changes and harmful effects on health. The polymeric materials currently used in the production of ophthalmic lenses include polycarbonate, ethylene glycol diallyl dicarbonate resins, polyureas and polyurethanes. Bisphenol A is a diphenol used in the production of polycarbonate. Similar in structure to oestrogen, it has been associated with various adverse effects on human health and is considered an endocrine disruptor.

Knowing that the manufacturing process of ophthalmic lenses largely contributes to the contamination of wastewater by microplastics, there is an urgent need to find alternatives to the materials used for the production of these optical devices.

In addition, another objective of the present invention is an ophthalmic lens manufacturing process that stands out for its combination of environmental sustainability and exceptional optical performance, combining advanced injection techniques such as rapid heat cycle moulding (RHCM) and organic-based materials, namely, but not exclusively, polylactic acid (PLA). In addition, the lenses of the present invention comprise metallic oxides, namely, but not exclusively, nanoparticles of ZrO₂, ZnO, SiO₂ MgO and TiO₂. The integration of metal oxide nanoparticles significantly improves the mechanical strength, elasticity and hydrophobicity of the lenses, without compromising their clarity and recyclability.

In addition, the lenses of the present invention comprise organic coatings, particularly, but not exclusively, naphthopyrans.

### The ophthalmic lens industry

The number of ophthalmic lens wearers has increased significantly in recent years, both due to the natural ageing of the population and the increase in people with myopia due to new lifestyle habits (presbyopia growth rate 2,5%, myopia growth rate 3,3%). Currently, more than 1.260 million ophthalmic lenses are produced every year, as well as the same number of non-graded spectacle lenses and more than 600 million lenses for reading glasses (pre-graded), totalling around 3.000 million units per year. This is therefore an industry that has a strong environmental impact. The lenses are not recycled and the manufacturing and grinding process, for assembly into frames, produces a lot of wet waste which, as well as contributing to an increase in landfill waste, produces a considerable amount of micro- and nano- plastics which do not receive proper treatment and end up being dumped into watercourses and the ocean, inevitably ending up in the animal and human food chain.

The amount of waste produced by the ophthalmic lens industry is set to increase, as only 1,9 billion of the 4,4 billion people who need optical correction currently wear glasses. In addition, there is a general trend towards increased use of sunglasses. In 2015, 1,4 billion people would wear sunglasses, leading to a considerable increase in waste with a strong environmental impact. If we add to all this the increase in the world's population and the accessibility of these optical devices, the amount of waste produced in this industry is worrying.

Of all the properties of a lens material, the one most closely related to optical performance is its dispersion, which is specified by the Abbe number. Low Abbe numbers reveal the presence of chromatic aberration (i.e. colour fringing), especially in larger lens sizes and stronger prescriptions (± 4D or higher). The evolution of these materials has been to make them more resistant, lighter and with better optical quality, without considering their environmental impact. Life cycle of organic ophthalmic lenses.

The polymers used to produce ophthalmic lenses come from the petrochemical industry and the largest manufacturers are in Asia and America. The polymers are produced in blocks that are then processed in lens factories around the world, which turn them into the ophthalmic lenses that reach opticians. During the manufacturing process, a lot of waste is produced that cannot be properly treated, thus having a very negative impact on the environment and human health. It is important to note that even in a closed circuit, the filters of the cutting and grinding machines are periodically washed, which leads to water contamination. During the lens manufacturing process, plastic waste is generated, firstly from the cutting of the initial block for the production of a patella, and then in the production of the lens with the desired graduation. Throughout this process, there is a need for water cooling, generating wet waste that can, in some cases, be subjected to primary treatment by centrifugation in order to reduce the amount of water before being sent to its final destination. Also in the commercialisation phase, these lenses continue to produce waste with a major environmental impact, since they require trimming in order to fit the frames of the final customer. So, once again, the lens is cut, generating wet waste in the form of small polymer particles. In this case, the waste from organic lenses is mixed with that from mineral lenses, as the cutting machine is usually the same for the various types of materials used to make lenses, making it even more difficult to treat this waste properly. During all stages of the process, from the manufacturing process, through cutting and assembly into a frame to final disposal, many lenses are not recycled. These are the so-called scrap lenses, i.e. lenses that don't pass quality control at one stage or another in the process, and old lenses from wearers that are sent to landfill. The processes for recovering this waste are compromised by the additives and treatments that ophthalmic lenses include, although many are possible to remove through washing and refining. However, there are others that are not, namely chemical or physical contaminants that are incorporated into the structure of the waste itself. Also, the different polymers used make this recycling process difficult. When they reach the end of their lifespan, these lenses are disposed of in unsorted waste containers and end up in landfills. As we have seen, this waste is difficult to recycle for the reasons explained above and does not have good characteristics for energy recovery, due to its high-water content (around 55% in non-centrifuged samples and of 30 per cent in dry samples).

The application of a biopolymer from natural and biodegradable sources, polylactic acid (PLA) in the manufacturing process of optical lenses, is a raw material that allows for various additives to shape its characteristics, such as refractive index, melting temperature, transparency and colour, among others. However, challenges such as low light absorption at short wavelengths limit its optical performance.

The solution proposed is the addition of nanoparticles, particularly, but not exclusively, ZrO₂, ZnO and MgO, and other synthetic polymers to significantly improve its mechanical and optical properties, such as resistance to attraction, increased elastic modulus and resistance to tear continuity.

### Advanced injection techniques in the ophthalmic lens manufacturing process

With the emergence of new rapid heat cycle moulding (RHCM) techniques, several variants have been developed, all of which use the same principle, but differ in the technologies associated with heating and cooling the moulding tools, differing mainly in the heating technology applied.

The three main heating strategies are:
- Convective heating: In this method, a fluid establishes convective heat flow with the wall of the channel, using the cooling lines for both heating and cooling processes. Initially, oil [4] was used, but this was abandoned due to its low boiling point and reduced thermal conductivity. Subsequently, hot gases and flue gases were used, which naturally evolved into the use of water vapour as a heat carrier;
- Induction Heating Moulding (IHM):In this technique, a highfrequency electromagnetic field generates heat via the Joule effect directly in the volume on the surface of the cavity. The coils are installed in specifically designed channels or cavities between the cooling channels and the cavity surface. Ferromagnetic materials are used so that eddy currents provide rapid and homogeneous heating, especially in small tools. However, the increased cost of induction heating must be carefully calculated so as not to compromise the viability of the project;
- Electrically heated moulding (E-mould):In this method, heat is generated according to Joule's first law when a low-frequency current is applied to resistors. In these devices, power density is a crucial design factor. Currently, a power of 40 W/cm² is used for this type of system, being limited to powers of 100 W/cm² for this process. An electrical resistor is used as a heating element and is implemented in the tool close to the moulding zone. The resistors and the cooling channels are usually interspersed with each other to maximise energy efficiency. Instead of interspersing the resistors with the cooling channels, it is also possible to implement specific resistors inside the cooling channels, although this process is conditioned by the boiling point of the water due to the boiling temperature of the cooling fluid. The simplicity of this method, the low cost and the ability to operate at temperatures of up to 250 °C are the main advantages of this variant; on the other hand, the low efficiency and response time are not insignificant disadvantages.

Regardless of the technique used, it is extremely important to ensure precise temperature control within the rapid heat cycle moulding (RHCM) technique in order to achieve lower temperature gradients, which translates into better mould filling, guaranteeing ideal conditions for the injection of defect-free polymer parts. The use of simulations, experimental results and analyses with pressure and temperature sensors in the cavity allows detailed knowledge to be obtained about the RHCM moulding technique, highlighting this technology's ability to control temperature throughout the various injection stages. This precise control makes it possible to achieve homogeneity in the temperature distribution, which results in improved quality of the parts produced.

The present invention represents a significant advance in the manufacturing process of optical lenses, particularly, but not exclusively, ophthalmic lenses, by introducing a revolutionary method based on moulding techniques such as rapid heat cycle moulding (RHCM) which comprises rapid heating and cooling cycles for the production of high-quality lenses. This moulding technique offers a highly precise and efficient approach, guaranteeing exceptional results in terms of optical quality and dimensional accuracy, promoting the production of environmentally friendly and more sustainable products and, additionally, reducing defects in the parts produced.

In the present invention, the application of the rapid heat cycle moulding (RHCM) technique in the lens manufacturing process has shown unexpected and highly positive results compared to the current state of the art. A significant improvement was observed in the transparency and optical quality of the lenses produced through the implementation of the aforementioned techniques.

### Polymeric materials used in the manufacture of ophthalmic lenses

The synthetic polymers most commonly used in the manufacture of ophthalmic lenses include di-carbonate di-allyl ethylene glycol resins, better known by their trade name CR-39^{®}, polycarbonate, Trivex^{®}, and high refractive index polymers. Of the various polymers used in the manufacture of ophthalmic lenses, CR-39^{®}, created by Columbia Laboratories in Ohio, USA in 1940, is still the most widely used in this industry, despite having a Normal refractive index of 1,48 ≤ nd <1,54, since it has an excellent Abbe number of around 60. CR-39^{®} resin, whose refractive index is 1,498, accounts for 80,5 per cent of the lenses sold today.

This polymer was initially invented to help create glass-reinforced plastic fuel tanks for the B-17 bomber aircraft in the Second World War, reducing the weight and increasing the range of the bomber. In 1947, the Armorlite Lens Company realised the excellent optical characteristics of CR-39^{®} and manufactured the first ophthalmic lenses with this material.

With a refractive index similar to that of CR-39^{®}, there is Orma 15 resin, with a refractive index of 1,502, which, without a significant difference in index, offers greater resistance to scratches and UV protection up to 370 nm. High-index polymers (refractive index 1,54 to 1,67) have a high colour dispersion, as their Abbe number is quite low. Polycarbonate, with a refractive index of 1,59, also has the same problem, although with the advantage of being more resistant to impacts.

Some patent documents refer to the use of polymeric component, metal oxides and naphthopyrans as a material for the manufacturing of ophthalmic lenses. For instance, document EP3505562B1 refers to a "Process for manufacturing light absorbing polymer matrix". And document EP3103822B1 refers to a "Polymerizable composition for optical material, and optical material and plastic lens obtained from said composition".

### Advantages of the invention

The object of the present invention is optical lenses, more specifically ophthalmic lenses, made from a thermoplastic aliphatic polyester, namely from polylactic acid (PLA), thus contributing to the solution of the exponential increase of microplastics in the environment and reducing the enormous environmental impact caused by lenses made from fossil based synthetic polymeric materials.

The advantages of an ophthalmic lens made from PLA over those on the market include:
- significant reduction in waste caused by the ophthalmic optical industry;
- less dependence on fossil fuels;
- use of a material made from raw materials including plants, food, agricultural and forestry waste and microalgal biomass from water and/or air cleaning processes, industrial and urban waste and CO₂ capture;
- high number of Abbe;
- transparency to the wavelengths of the spectrum in the UV region and, consequently, low UV and visible degradation, not acquiring, over time, the yellowish colouring characteristic of conventional plastic ophthalmic lenses.

Additionally, the optical lenses of the present invention have improved optical and mechanical properties because they include nanoparticles in PLA composites. Furthermore, the addition of metal oxides, namely, but not exclusively, nanoparticles of ZrO₂, ZnO and MgO increases tensile strength, elongation at break and surface hydrophobicity, while maintaining high transparency.

Additionally, the optical lenses of the present invention comprise naphthopyrans that can block 95 to 99% of harmful UV radiation, while maintaining the passage of visible light.

The introduction of hydroxyl groups and other substituents in the peripheral positions of naphthopyran molecules facilitates homogeneous dispersion within the PLA matrix, without compromising photochemical properties.

Naphthopyrans as mechanophoric materials provide a visible colour change under mechanical stimulation, allowing the detection of critical levels of stress or deformation in lenses. This additional stress assessment mechanism is crucial for the manufacturing process and the quality of the lenses.

As the naphthopyrans has a very fast reversible response and dissolve in the same organic solvents used for PLA and photochromic compounds, they can be easily impregnated into the polymer matrix (impregnation of the material into the lens).

In addition, another object of the present invention consists of a process for manufacturing optical lenses, namely, but not exclusively, ophthalmic lenses that stands out for combining environmental sustainability and exceptional optical performance, with the combination of advanced injection techniques such as rapid heat cycle moulding (RHCM) and organic-based materials, namely, but not exclusively, polylactic acid (PLA). The present invention represents a significant advance in the manufacturing process of optical lenses, particularly but not exclusively ophthalmic lenses, by introducing a revolutionary method based on moulding techniques such as rapid heat cycle moulding (RHCM) comprising rapid heating and cooling cycles for the production of high-quality lenses. This moulding technique offers a highly precise and efficient approach, guaranteeing exceptional results in terms of optical quality and dimensional accuracy, promoting the production of environmentally friendly and more sustainable products.

### Detailed description of the invention

The Abbe number of a transparent material is the dimensionless quantity that arises when comparing the material's index of refraction at different frequencies. This comparison shows that the white light incident on the transparent material, which is made up of different wavelengths, suffers a greater deviation at the shorter wavelengths. It is named after the German physicist Ernst Abbe (1840-1905) who described it. The higher the Abbe number, the higher the optical quality of a lens in terms of chromatic aberration (the decomposition of white light into different colours, which is observed when looking through the lens).

"Frameless frame" is a frame in which the edge of the lens is completely uncovered. The lenses are attached to the frame by means of holes in them.

"Nilor frames" are frames in which part of the edge of the lens is uncovered. In this type of frame, the lens has a groove along the edge where the nylon thread that holds the lens in place fits into part of the lens (the uncovered part). The remaining part of the lens fits into a slot in the frame. They can be made of metal or acetate.

"Ophthalmic lenses with superior optical quality" and "high quality optical lenses" mean lenses that provide the best possible visual experience, offering optimised clarity, comfort and protection.

"Adequate heating of the mould" means heating the moulding zone with a uniform temperature distribution over the entire surface of the moulding zone.

"Surfacing" means the process of transforming ophthalmic blocks into lenses.

According to the invention, the optical lens comprises in its composition:
- a polymeric component;
- metal oxides; and
- naphthopyrans.

The composition described finds applications in ophthalmic lenses, which can be used in prescription glasses and sunglasses.

### Polymeric component

The object of the present invention is optical lenses, more specifically ophthalmic lenses, manufactured from a polymeric component.

The polymeric component is selected, in particular, but not exclusively, from among a thermoplastic aliphatic polyester or polyhydroxyalkanoates (PHA).

The thermoplastic aliphatic polyester is bio-based and biodegradable.

The thermoplastic aliphatic polyester is preferably polylactic acid (PLA).

The polyhydroxyalkanoates (PHA) are optical grade and highly transparent.

Polylactic acid (2-hydroxypropionic acid), or polylactide, PLA, is a thermoplastic aliphatic polyester that consists of repetitive units of lactic acid (2-hydroxypropionic acid) and is obtained from two monomers: lactic acid and lactide. Both have stereoisomers. Lactic acid has two stereoisomers, L-lactic acid and D-lactic acid, while lactide has four different isomers: L-lactide, D-lactide, a racemic mixture of D-lactide and L-lactide and meso-lactide. The different proportions of L and D stereoisomers are directly related to the crystallinity of the polymer and therefore determine the physical, mechanical and optical properties of PLA. The polymerisation of L-lactic acid (greater than 90%) results in a semi-crystalline polymer with a melting temperature of around 180 °C and a glass transition temperature of around 67 °C. The polymer made from a racemic mixture of D- and L-lactic acid gives rise to amorphous polymers with glass transitions near room temperature. Renewable sources such as sugar, corn, food waste, agricultural waste, forestry waste and microalgal biomass can be processed to obtain D-glucose, which is then fermented by optimised strains of *Lactobacillus,* resulting in lactic acid. PLA is a biodegradable polymer, used as an alternative to conventional petroleum-based plastics, biocompatible, compostable, has low toxicity, and finds application in numerous industries, namely food packaging, biomedical devices, agriculture, among many others. The biotechnological production of lactic acid offers several advantages compared to chemical synthesis, such as low environmental impact, low substrate costs, low energy consumption and high product specificity.

### Physical properties

PLA has a specific weight of 1,24.

### Thermal properties

The glass transition temperature is around 64 °C, depending on the ratio of enantiomers (D-LA/L-LA). The degradation temperatures are between 170 and 190 °C.

### Optical properties

PLA is colourless and completely transparent at the wavelengths of the UV spectrum. This characteristic means that this biopolymer shows low degradation by UV and visible radiation and does not acquire, over time, the yellowish colour characteristic of conventional plastic ophthalmic lenses.

The Abbe number of a PLA lens is similar to the Abbe number of CR-39^{®}, an organic material used in the ophthalmic lenses, which has the best Abbe value.

PLA has suitable properties that allow it to be processed by various production methods, including, injection, moulding, casting or 3D printing.

It is possible to add additives and catalysts that increase the performance of the ophthalmic lens in terms of refractive indices, deformation temperatures, in particular but not exclusively, lactic acid oligomers and citrate esters, which act as non-toxic plasticizers and replace traditional phthalates. Oligomers of lactic acid and citrate esters improve the thermal stability and mechanical and mechanical properties of the material. A long-term stability is another factor to take into account.

Low molecular weight citrate esters increase the enzymatic degradation of PLA, while high molecular weight citrate esters decrease the enzymatic degradation of PLA when compared to PLA without plasticisers. In this context, a compromise will have to be made between persistence and ephemerality; at the same time as requiring a material that is biodegradable and does not remain in the environment for long, it is essential that the material maintains the same stability in terms of mechanical and optical properties over the product's lifetime.

Thus, in the composition of a PLA ophthalmic lens, conventional additives or "green" additives can be chosen, which are biodegradable, have passed toxicity, sensitisation, mutagenicity and oestrogenicity tests, and have the same or better plasticising effect than conventional additives. This class of plasticisers includes isosorbide esters, which have properties similar to 2-ethylhexyl phthalate (DEHP), citrate esters and glycerol citrates (acylated glycerol derivatives). PLA also has a high surface energy, which makes it suitable for receiving the various optical treatments commonly used in ophthalmic lenses, namely but not exclusively: anti-reflective, photochromic, UV, scratch and wear protection.

### Metal oxides

Additionally, the lenses of the present invention comprise metal oxides, namely but not exclusively nanoparticles of ZrO₂, ZnO, MgO, SiO₂ and TiO₂. The integration of metal oxide nanoparticles significantly improves the mechanical and optical properties, such as tensile strength, increased modulus of elasticity, resistance to tear continuity and hydrophobicity of the lenses, without compromising their optical clarity and recyclability.

### Naphthopyrans

Lenses comprising PLA are increasingly popular due to their sustainability and optical properties favourable. However, traditional PLA lenses have some limitations, such as low UV absorption and low scratch resistance. In the present invention, naphthopyrans are used to overcome these limitations and improve the performance of PLA lenses. Naphthopyrans can be applied to ophthalmic lenses in various ways. They can be applied as coatings on the lens surface or incorporated into the lens matrix. Naphthopyrans are used to improve the absorption of UV light (the naphthopyran coating can block more than 95 to 99 per cent of harmful UV radiation, allowing visible light to pass through) and reduce glare, but they can also be used to modify the optical properties of the lens, such as the refractive index, light dispersion and to improve the lens' resistance to scratches and abrasions. Naphthopyrans have hydroxyl groups on the periphery of the molecule. These hydroxyl groups facilitate the homogeneous dispersion of naphthopyrans in the PLA matrix without affecting the molecule's photo-inversion region, thus preserving its photophysical properties. In addition, these peripheral hydroxyl groups improved the deposition of naphthopyran films on the surface of PLA ophthalmic lenses. Another advantage of these groups is their greater environmental biodegradability, since the hydroxyl groups facilitate the biodegradation of the aromatic rings by environmental bacteria.

In addition to the hydroxyl groups, naphthopyrans may have alkoxy groups derived from the hydroxyl groups in the peripheral phenyl positions to improve water solubility and the manufacturing process for ophthalmic lenses. In addition, naphthopyrans may have polyalcohol and polyether groups in the peripheral phenyl positions.

Naphthopyrones are compounds that have photochromic properties, i.e. they change colour when exposed to light. In their cyclic form, naphthopyrones are colourless, but under the action of light (especially ultraviolet light: UV), a photo-isomerization reaction occurs which causes the pyran ring to open and transform into open molecular forms, which are coloured. This process is reversible, so when the light source is removed, the coloured open forms return to their colourless cyclic form. This characteristic makes naphthopyrones very useful in a variety of applications, such as photochromic lenses, which automatically darken in sunlight and lighten in dim indoor environments.

Polylactic acid (PLA) is a biodegradable polymer often used in optical devices. In our tests, it was observed that the return from the open (coloured) form to the closed (colourless) form occurs exceptionally quickly when naphthopyrones are deposited or mixed in polylactic acid lenses.

Although it might have been expected that the lens of the invention would return from the open (coloured) form to the closed (colourless) form more quickly than with lenses made from fossil based synthetic polymeric materials, where the fastest lenses take around from 30 seconds to 1 minute to darken when exposed to sunlight and around 2 to 5 minutes to lighten again when exposure to light decreases, with the lens of the invention a truly unexpected technical effect occurred, as the transition to return to the closed (colourless) form took less than 10 seconds to fully recover.

The field of polymer mechano-chemistry under stress is gaining significant attraction, investigating how mechanical forces trigger chemical reactions in stress-sensitive functional groups in polymers. These functional groups, called mechanophores, act as transducers, converting mechanical energy into specific chemical transformations after the application of tension. Of particular interest for stress visualisation are mechanophores that exhibit a visible colour change after mechanical stimulation. This provides a simple and effective method for detecting critical levels of stress or strain in polymeric materials. In the present invention, naphthopyrans are traditionally used as colour stress sensors to evaluate the stress forces inside and on the surface of the ophthalmic lens, as a complement to the photochromic properties. The tension inside the lens is an important factor in the manufacturing process and, despite the existence of reflective methods for evaluating tension limits, the addition of a secondary tension evaluation mechanism could be of great importance in the lens industry.

### Stages of the manufacturing process

The manufacturing process of the lenses includes the following steps:

### a) Drying prior to processing

Humidity control is essential to guarantee the required properties and the final quality of the lenses. Before processing, the polymeric component must be dried in order to eliminate absorbed moisture and avoid excessive hydrolysis (drop in molecular weight) which compromises the polymer's physical properties.

### b) Addition of catalysts and/or additives

In the present invention, the lens production process is carried out by injection moulding. In the process of producing lenses by injection, catalysts and/or additives are added during the lens moulding process. Biodegradable bio-based catalysts and/or additives are added to the polymer matrix in order to improve the physical, optical, mechanical and chemical qualities of the lenses. These additives include, but are not limited to, metal oxides, radiation filters, lactic acid oligomers and citrate esters. The incorporation of biodegradable additives also contributes to environmental sustainability.

The melting and crystallisation temperature of the polymer matrix can be altered using additives, allowing adjustments to be made to the thermal behaviour during processing; optical properties such as transmittance or refractive index can be altered by increasing the refractive index, thus making lenses of reduced thickness without compromising their optical efficiency. In addition, the hardness and flexibility of the lenses can be manipulated by adding additives, making it possible to adapt the lenses to a wide range of supports, such as designer or *nylor frames.* It is possible to use conventional additives, including, among others, UV absorbers, mould release agents, stabilisers and dyes.

To increase the refractive index, it is possible to include metal oxides such as, but not limited to, titanium dioxide nanoparticles, allowing thinner lenses to be manufactured.

Radiation filters aim to protect the eyes from harmful radiation, such as UV rays and blue-violet radiation, which is found in the wavelengths between 380 and 440 nm of the electromagnetic spectrum, in the visible light region. Considered potentially harmful, blue light from mobile devices and LED lighting can have a negative effect on visual health, contributing to eye fatigue and interfering with sleep quality. The inclusion of radiation filters in lenses provides an effective barrier against these harmful wavelengths, protecting the eyes from the adverse effects of prolonged exposure to blue and UV light, and improving visual comfort during activities such as reading and using computers.

Lactic acid oligomers and citrate esters play an important role as non-toxic plasticisers to replace traditional phthalates, with the aim of improving the flexibility of the polymeric matrix without compromising the safety and health of users.

### c) lens moulding process

The lens moulding process of the present invention comprises the rapid heat cycle moulding (RHCM) technique using advanced injection technology, the Variotherm technology.

The moulding process begins with rapid heating of the mould via the Variotherm technology, which employs integrated fluid circuits (conformal cooling), to deliver precise thermal energy and guarantee a homogeneous temperature distribution.

After the mould has been properly heated, the polymeric component is injected into the mould at a pressure of 1100 bar and a counterpressure of 788 bar. The controlled temperature of the mould allows the material to flow at a lower shear rate, reducing internal stresses and promoting a smoother and more uniform fill, resulting in lenses with precise shapes and thinner thicknesses.

Once the mould is filled, controlled cooling begins. The cooling system is designed to ensure rapid and controlled cooling of the material, allowing the lens to solidify with minimal deformation or internal stress.

Controlled heating/cooling allows the polymeric material to be injected into the mould cavity uniformly and homogenously, resulting in lenses with precise curvatures and consistent thicknesses. Their uniformity is essential to guarantee the lenses' proper optical performance, especially in ophthalmic applications where precision is crucial to guarantee their optical performance and specifications.

In Variotherm technology, the mould is quickly heated to a higher temperature than conventional, which can vary between 80°C and 140°C for PLA, depending on the specific needs of the part and the complexity of the mould. After injection, the mould is quickly cooled to solidify the part. The cooling temperature can be significantly reduced to around 30 °C to 60 °C. However, the temperature window can vary depending on the material being injected.

During injection, it is crucial to control the melting and crystallisation temperatures of the polymeric component in order to avoid the formation of tensions in the lens, which could compromise its transparency and tension-free optical quality.

RHRC technologies are advanced and efficient injection moulding techniques capable of producing high quality optical lenses, providing a series of benefits in terms of efficiency and quality of the final product:
- induction heating provides rapid heating of the mould, significantly reducing the time of a production cycle;
- homogeneous temperature distribution and precise control of the process guarantee lenses with precise shapes and thinner thicknesses, without dimensional distortions;
- controlled cooling of the mould results in lenses with excellent transparency, free of internal stresses and defects, guaranteeing superior optical quality; and
- rapid heating and controlled cooling reduce energy consumption during the moulding process, making it more efficient and sustainable.

### d) lens grinding

The lens is grinding in order to obtain a final optical amplifying or corrective lens, through surfacing, in which one or both faces of the lens are thinned to obtain a lens that corresponds to the final optical grade desired.

### e) surface treatments

After surfacing, the final lens undergoes various surface treatments to improve its optical, aesthetic and functional properties. These treatments cover a variety of techniques, including, but not limited to, plasma surface treatments, hardening treatments, discolouration, anti-scratch, anti-fog, anti-static, hydrophobic, blue light blocking, oleophobic, anti-reflective and/or functional coatings.

The hardening treatment is applied to increase the strength of the lens surface, creating a tough protective layer that protects the lens from scratches and damage. Anti-fog, anti-static and hydrophobic coatings are applied to improve the comfort and practicality of the lenses in various environmental conditions, preventing the formation of condensation on the lenses, the accumulation of dust and dirt on the lenses and repelling water and other liquids.

The anti-reflective coating is effective in reducing unwanted reflections on the lenses. This treatment is particularly useful when driving at night, reading for long periods or using computers, where reducing glare can significantly improve visual quality and reduce eye fatigue.

### Bibliography

- http://www.unep.org/newscentre/un-declares-war-oceanplastic
- Cole M, Lindeque P, Fileman E,Halsband C, Goodhead R, Moger J, Galloway T. Microplastics ingestion by zooplankton. Env Sci Tec. 2013; 47: 6646-6655
- Cole M, Lindeque P, Fileman E,Halsband C, Goodhead R, Moger J, Galloway T. Microplastics ingestion by zooplankton. Env Sci Tec. 2013; 47: 6646-6655
- Karami A, Golieskardi A, Choo CK, Larat V, Gallpway T, Salamatinia B. The presence of microplastics in commercial salts from different countries. Sci Rep. 2017; 7:46173
- Rillig M, Microplastic interrestrial ecosystems and the soil? Env Sci Tec. 2012; 46: 6453-6454
- Huerta E et al. Bioaccumulation of microplastics in the terrestrial food chain: an example from home gardens in SE Mexico. Geophysical Research abstract. 2017; 19
- Bergman et al. The Impact of Endocrine Disruption: A Consensus Statement on the State of the Science Environ Health Perspect 2013:121:a104-a106
- Porta M, Puigdomènech E, Ballester F, Selva J, Ribas-Fitó N, Llop S. Monitoring concentrations of persistent organic pollutants in the general population: the international experience. Environ Int. 2008;34:546-61
- Lee DH, Porta M, Jacobs DR, Vandenberg LN. Chlorinated persistent organic pollutants, obesity, and type 2 diabetes. Endocrine Reviews 2014; 35: 557-601
- https://www.essilor.com/essilor-content/uploads/2016/08/ *Presentation_2015_Results_Essilor.pdf*
- Ruivinho C. Valorizaçào dos resíduos de lentes oftálmicas orgânicas. 2010
- Fregolente P. Estudo da fotopolimerizaçào de monômeros monofuncionais e multifuncionais para produção e recobrimento de lentes oftálmicas. Campinas, 2006
- Lim L-T, Auras, R, Rubino, M. Processing technologies for poly(lactic acid) Prog. Polym. Sci. 2008, 33, 820

## Claims

1. Optical lens comprising a polymeric component, metal oxides and naphthopyrans **characterised in that** the polymeric component is a thermoplastic aliphatic polyester or a polyhydroxyalkanoates (PHA).

2. Lens according to the preceding claim, **characterised in that** the thermoplastic aliphatic polyester is bio-based.

3. Lens according to the preceding claim, **characterised in that** the bio-based aliphatic thermoplastic polyester is biodegradable.

4. Lens according to any of the preceding claims, **characterised in that** the thermoplastic aliphatic polyester is polylactic acid (PLA).

5. Lens according to any of the preceding claims, **characterised in that** the metal oxides are nanoparticles of ZrO₂, ZnO, MgO, SiO₂ and TiO₂.

6. Lens according to any of the preceding claims, **characterised in that** the naphthopyrans have hydroxyl groups, alkoxy groups derived from hydroxyl groups in the peripheral phenyl positions, polyalcohol and polyether groups in the peripheral phenyl positions.

7. Manufacturing process of the optical lens claimed in any of the preceding claims, **characterized in that** it comprises the following steps:
a) drying prior to processing;
b) addition of catalysts and/or additives;
c) lens moulding process;
d) lens grinding; and
e) surface treatments.

8. Process according to the previous claim, **characterized in that** the lens is manufactured by injection.

9. Process according to claim 7, **characterized in that** step b) takes place during step c).

10. Process according to claim 7, **characterized in that** in step b) the additives are selected from: metal oxides, radiation filters, lactic acid oligomers and citrate esters.

11. Process according to claim 7, **characterized in that** step c) comprises a rapid heat cycle moulding (RHCM) technique using advanced injection technology, RocTool technology.

12. Process according to claim 7, **characterized in that** step c) comprises controlled heating/cooling.

13. Process according to claim 7, **characterized in that** step d) is carried out by surfacing.

14. Process according to claim 7, **characterized in that** step e) comprises hardening, tinting, anti-scratch, anti-fog, anti-static, hydrophobic, blue light blocking, oleophobic, anti-reflective treatments and/or functional coatings.

15. Use of the lens claimed in any of claims 1 to 6 in ophthalmic lens.
